# EUROPEAN PATENT APPLICATION

(11) **EP 4 779 697 A1**
(43) Date of publication of application: **22.07.2026**
(21) Application number: 25864539.9
(22) Date of filing: 01.09.2025
(51) Int. Cl.: H01M 4/04, B05B 12/20, B05D 1/32, B05C 21/00

(54) **ELECTRODE SHEET MANUFACTURING APPARATUS**

(30) Priority: 28.10.2024 KR 20240148865
(71) Applicant: LG Energy Solution, Ltd., Seoul 07335 (KR)
(72) Inventor: LEE, Jae Seong, Daejeon 34122 (KR)
(74) Representative: BCKIP Part mbB
(86) International application number: PCT/KR2025/013344
(87) International publication number: WO 2026/095305

(57) **Abstract**

Disclosed is an electrode sheet manufacturing apparatus including an electrode current collector unit including an electrode current collector sheet supply roll configured to supply an electrode current collector sheet and an electrode current collector sheet winding roll configured to rewind the electrode current collector sheet, a coating unit configured to coat the electrode current collector sheet with electrode slurry, and a guide unit including a band-shaped guide member configured to prevent run-off of the electrode slurry, wherein the guide member is in contact with the electrode current collector sheet but is not attached thereto.

## Description

### [Technical Field]

This application claims the benefit of priority to Korean Patent Application No. 2024-0148865 filed on October 28, 2024, the disclosure of which is incorporated herein by reference in its entirety.

The present invention relates to an electrode sheet manufacturing apparatus. More particularly, the present invention relates to an electrode sheet manufacturing apparatus capable of preventing run-off of electrode slurry formed on an electrode current collector sheet by coating to form an electrode layer having a uniform thickness.

### [Background Art]

Research and development on lithium secondary batteries, which exhibit high energy density and high power characteristics, is actively underway due to the need for eco-friendly alternative energy sources driven by rapidly worsening climate change and carbon emission regulations.

A lithium secondary battery may be manufactured through a process of forming an electrode mixture layer on at least one surface of an electrode current collector sheet to manufacture an electrode sheet, slitting and notching the electrode sheet to form a unit electrode, and stacking the unit electrode with a separator to manufacture an electrode assembly.

The electrode assembly may undergo a lamination process in which a positive electrode and a negative electrode are stacked with a separator interposed therebetween and then heated and pressed to increase adhesion between the electrodes and the separator.

In order to form the electrode mixture layer, the electrode current collector sheet is coated with electrode slurry, and the electrode slurry is dried. Before drying, however, the electrode slurry may run off from both ends of the electrode mixture layer, resulting in a part of the electrode mixture layer having a smaller thickness. The smaller thickness part of the electrode mixture layer is referred to as a sliding portion.

If the sliding portion is formed, the portion is not in tight contact with the separator but lifts from the separator, which may not only reduce charge/discharge efficiency but may also cause lithium ion precipitation. Since accumulated lithium ion precipitation may reduce the battery capacity, various attempts have been made to prevent the formation of the sliding portion.

In Patent Document 1, an electrode is manufactured by attaching masking tape to the surface of a current collector, stacking an active material on the current collector, and removing the masking tape to form a part on which the active material is not stacked.

However, the electrode manufacturing method of Patent Document 1 includes the steps of stacking the active material even on the masking tape and removing the masking tape with the active material stacked thereon, resulting in the disadvantage of unnecessary waste of the active material.

Patent Document 2 discloses an electrode manufacturing method of forming a dam line coating layer having a predetermined width and a shape that surrounds a region to be coated with electrode slurry on a current collector and coating the region surrounded by the dam line coating layer with electrode slurry to form an electrode mixture layer.

The electrode manufactured according to Patent Document 2 is configured such that the dam line coating layer is formed so as to surround the entirety of the outer periphery of the electrode mixture layer, whereby the area of the electrode mixture layer is reduced by the area where the dam line coating layer is formed, which inevitably leads to a decrease in the battery capacity.

In addition, Patent Document 2 relates to a method of manufacturing a single electrode, which is difficult to apply to an electrode sheet manufacturing process.

Therefore, there is a need for technology for, in a step of forming an electrode mixture layer on an electrode current collector sheet to manufacture an electrode sheet, preventing the formation of a sliding portion in the electrode mixture layer such that the electrode mixture layer has a uniform thickness.

### (Prior Art Documents)

(Patent Document 1) Korean Patent Application Publication No. 2023-0008975 (2023.01.17)
(Patent Document 2) Korean Patent Application Publication No. 2022-0124918 (2022.09.14)

### [Disclosure]

### [Technical Problem]

The present invention has been made in view of the above problems, and it is an object of the present invention to provide an electrode sheet manufacturing apparatus capable of forming an electrode mixture layer having a uniform thickness by applying a guide unit in order to prevent run-off of electrode slurry during a process of manufacturing an electrode sheet.

### [Technical Solution]

An electrode sheet manufacturing apparatus according to the present invention to accomplish the above object includes an electrode current collector unit including an electrode current collector sheet supply roll configured to supply an electrode current collector sheet and an electrode current collector sheet winding roll configured to rewind the electrode current collector sheet, a coating unit configured to coat the electrode current collector sheet with electrode slurry, and a guide unit including a band-shaped guide member configured to prevent run-off of the electrode slurry, wherein the guide member is in contact with the electrode current collector sheet but is not attached thereto.

In the electrode sheet manufacturing apparatus according to the present invention, the guide member of the guide unit may be added to each of both ends of the electrode current collector sheet parallel to a transfer direction thereof, and the coating section may coat the electrode current collector sheet having the guide member added thereto with the electrode slurry.

In the electrode sheet manufacturing apparatus according to the present invention, the coating unit may coat the remainder of a surface of the electrode current collector sheet on which the guide member is not located with the electrode slurry.

The electrode sheet manufacturing apparatus according to the present invention may further include a drying unit disposed at a front end of the electrode current collector sheet winding roll, the drying unit being configured to dry the electrode slurry.

In the electrode sheet manufacturing apparatus according to the present invention, the thickness of the guide member may be greater than the coating thickness of the electrode slurry.

In the electrode sheet manufacturing apparatus according to the present invention, the transfer speed of the guide member may be equal to the transfer speed of the electrode current collector sheet.

The electrode sheet manufacturing apparatus according to the present invention may further include a plurality of supports configured to prevent separation of the guide member, wherein the plurality of supports may be located to support a second surface of the guide member, which is an outer surface opposite a first surface facing the electrode slurry.

In the electrode sheet manufacturing apparatus according to the present invention, a roller may be mounted on a part of each of the supports in contact with the guide member.

The electrode sheet manufacturing apparatus according to the present invention may further include an adjustment portion configured to adjust the length of each of the supports.

In the electrode sheet manufacturing apparatus according to the present invention, the guide unit may further include a plurality of guide rolls configured to guide a transfer direction of the guide member.

The electrode sheet manufacturing apparatus according to the present invention may further include a cleaning unit configured to clean the guide member.

In the electrode sheet manufacturing apparatus according to the present invention, the guide member may be configured to have a wound structure in which the guide member is wound on a roll rotated by a rotary shaft, and the guide unit may includes a guide member supply roll configured to supply the guide member to each of both ends of the electrode current collector sheet and a guide member winding roll configured to rewind the guide member after coating and drying of the electrode slurry are completed.

In the electrode sheet manufacturing apparatus according to the present invention, the guide member may be configured such that a plurality of guide lines is connected to each other via connection links in a closed-loop form, and the guide member may be rotated by a transfer roller in a state of being added to each of both ends of the electrode current collector sheet.

In the electrode sheet manufacturing apparatus according to the present invention, the length of the guide member may be adjusted through the connection links.

In addition, the present invention may provide various combinations of the above solving means.

### [Advantageous Effects]

An electrode sheet manufacturing apparatus according to the present invention is capable of preventing run-off of electrode slurry formed on an electrode current collector by coating, thereby forming an electrode mixture layer having a uniform thickness.

In addition, since a guide member is added to an electrode current collector sheet without being in contact therewith, the guide member may be easily removed from the electrode current collector sheet.

In addition, even if impurities such as electrode slurry are attached to and contaminate the guide member, it is possible to reuse the guide member by cleaning the same.

### [Description of Drawings]

FIG. 1 is a schematic view of an electrode sheet manufacturing apparatus according to a first embodiment of the present invention.
FIG. 2 is an enlarged perspective view of part A of FIG. 1, showing that an electrode current collector sheet with a guide member added thereto is coated with electrode slurry.
FIG. 3 is a vertical sectional view showing the state in which a support is added to an electrode sheet.
FIG. 4 is a plan view showing the state in which the support is added to the electrode sheet.
FIG. 5 is a schematic view of an electrode sheet manufacturing apparatus according to a second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

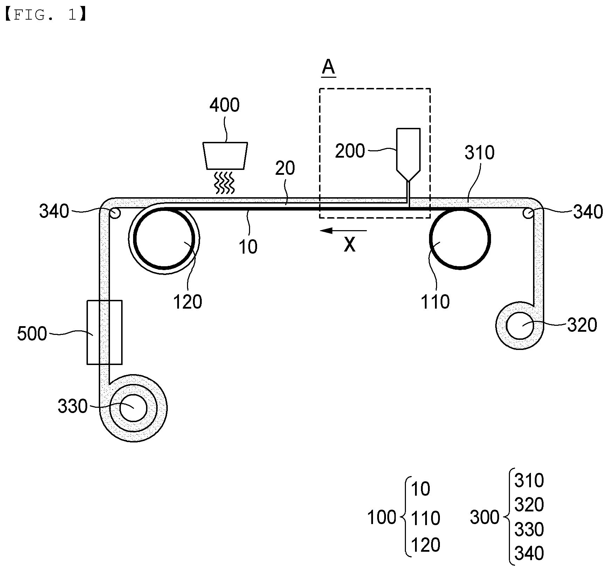

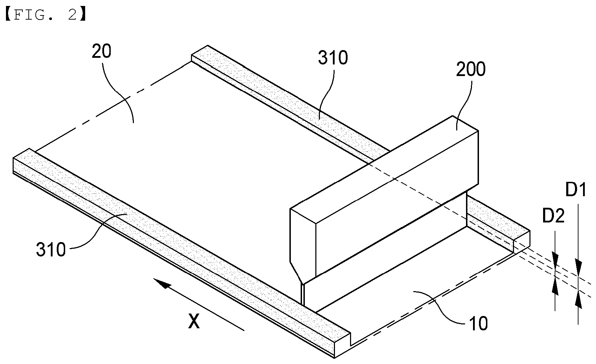

FIG. 1 is a schematic view of an electrode sheet manufacturing apparatus according to a first embodiment of the present invention, and FIG. 2 is an enlarged perspective view of part A of FIG. 1, showing that an electrode current collector sheet with a guide member added thereto is coated with electrode slurry.

Referring to FIGs. 1 and 2, the electrode sheet manufacturing apparatus according to the present invention includes an electrode current collector unit 100 including an electrode current collector sheet supply roll 110 configured to supply an electrode current collector sheet 10 and an electrode current collector sheet winding roll 120 configured to rewind the electrode current collector sheet 10, a coating unit 200 configured to coat the electrode current collector sheet 10 with electrode slurry 20, and a guide unit 300 including a band-shaped guide member 310 configured to prevent run-off of the electrode slurry 20.

In the present invention, the guide member 310 is in contact with the electrode current collector sheet 10 but is not attached thereto, and the guide member 310 is disposed on an upper surface of the electrode current collector sheet 10 in tight contact therewith.

In the first embodiment of the electrode sheet manufacturing apparatus according to the present invention, the guide member 310 is configured to have a wound structure in which the guide member is wound on a roll rotated by a rotary shaft, and the guide unit 300 includes a guide member supply roll 320 configured to supply the guide member 310 to each of both ends of the electrode current collector sheet 10 and a guide member winding roll 330 configured to rewind the guide member 310 after coating and drying of the electrode slurry 20 are completed.

The guide member supply roll 320 is located at a front end of the electrode current collector sheet supply roll 110, the guide member winding roll 330 is located at a rear end of the electrode current collector sheet winding roll 120, and the guide unit 300 may further include a plurality of guide rolls 340 configured to guide a transfer direction of the guide member 310.

The guide rolls 340 may be located between the guide member supply roll 320 and the electrode current collector sheet supply roll 110 to change the transfer direction of the guide member 310 by 90 degrees, and the guide rolls 340 may be located between the electrode current collector sheet winding roll 120 and the guide member winding roll 330 to change the transfer direction of the guide member 310 by 90 degrees. Since the plurality of guide rolls 340 is disposed between the guide member supply roll 320 and the guide member winding roll 330 to change a transfer path of the guide member 310, as described above, the guide member 310 may move in a taut state. Alternatively, the number and position of the guide rolls 340 are not limited to those shown in FIG. 1, more guide rolls 340 may be disposed to configure the transfer path of the guide member 310 in a zigzag pattern, and the change in the transfer direction of the guide member 310 is not limited to 90 degrees.

The guide member 310 of the guide unit 300 is added to each of both ends of the electrode current collector sheet 10 parallel to a transfer direction (x) thereof, and the coating section 200 coats the electrode current collector sheet 10 having the guide members 310 added thereto with the electrode slurry 20. Specifically, the coating unit 200 coats the remainder of the surface of the electrode current collector sheet 10 on which the guide members 310 are not located with the electrode slurry 20. That is, the electrode slurry 20 is applied to the space between the guide members 310 so as not to overlap the guide members 310. Before drying, the electrode slurry 20 may run off and spread due to fluidity thereof. Since the guide members 310 are added to prevent run-off of the electrode slurry 20, it is possible to minimize the formation of a sliding portion, thereby preventing thickness variations in an electrode mixture layer.

In addition, referring to FIG. 2, the thickness D1 of the guide member may be equal to or greater than the coating thickness D2 of the electrode slurry, thereby preventing run-off of the electrode slurry before drying and thus preventing the formation of a sliding portion. In addition, it is possible to prevent the electrode slurry from flowing over the guide member 310.

Specifically, the coating thickness D2 of the electrode slurry may be uniform in a single model, and may range from 50 µm to 500 µm depending on the model. The thickness D1 of the guide member may be equal to the coating thickness D2 of the electrode slurry or at least 1 µm greater than the coating thickness D2 of the electrode slurry.

The present invention may further include a drying unit 400 disposed at the front end of the electrode current collector sheet winding roll 120 to dry the electrode slurry such that the electrode slurry can be rapidly dried and the dried electrode sheet can be wound on the electrode current collector sheet winding roll.

Meanwhile, the transfer speed of the guide member 310 may be determined based on the rotational speed of the guide member supply roll 320 and the guide member winding roll 330. If the transfer speed of the guide member 310 and the transfer speed of the electrode current collector sheet are different from each other, shear force is generated due to the frictional force therebetween. The shear force may cause the electrode slurry to move in a direction opposite to the transfer direction of the electrode current collector sheet, in which case an unnecessary slope is formed in the electrode slurry coating, leading to variations in coating thickness. The difference in coating thickness and the difference in the loading amount of the electrode active material may affect electrode quality.

Therefore, it is desirable for the transfer speed of the guide member to be equal to the transfer speed of the electrode current collector sheet.

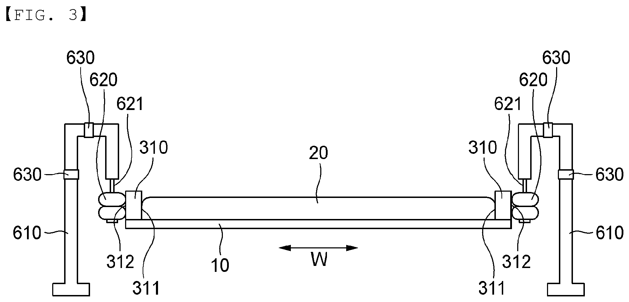

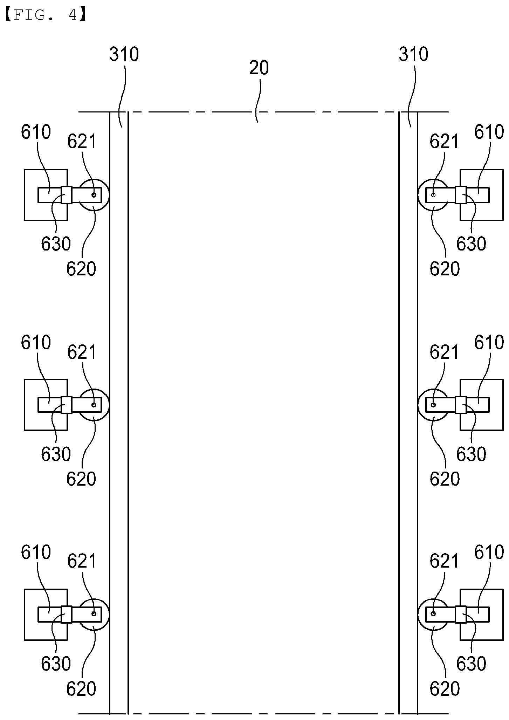

FIG. 3 is a vertical sectional view showing the state in which a support is added to the electrode sheet, and FIG. 4 is a plan view showing the state in which the support is added to the electrode sheet.

Referring to FIGs. 3 and 4, the electrode current collector sheet 10 is coated with the electrode slurry 20, and the guide member 310 is located at each of both ends of the electrode current collector sheet 10 in a width direction (W).

A plurality of supports 610 configured to prevent separation of the guide member 310 is disposed outside the guide member 310 in contact with the guide member 310. The plurality of supports 610 is located to support a second surface 312 of the guide member 310, which is an outer surface opposite a first surface 311 facing the electrode slurry 20.

Since the plurality of supports 610 is disposed in contact with the guide member 310, friction may occur at contact surfaces between the plurality of supports 610 and the guide member 310, which may affect the transfer speed of the guide member 310. Accordingly, a roller 620 may be mounted on a part of each of the supports 610 in contact with the guide member 310.

The roller 620 is configured to rotate about a rotary shaft 621 disposed in a direction perpendicular to the plane of the electrode current collector sheet 10, and the rotational direction and the rotational speed of the roller 621 may be configured to be the same as the transfer direction and the transfer speed of the guide member 310.

In addition, since the plurality of supports 610 is disposed along the transfer path of the electrode current collector sheet 10, width and height adjustment may be required depending on the positions where the plurality of supports 610 is disposed. Accordingly, an adjustment portion 630 configured to adjust the length of each of the plurality of supports 610 may be further provided, whereby width and height adjustment may be performed in the width direction (W).

For example, the adjustment portion 630 may be located between two length-adjustable rods that overlap each other and may be configured to rotate clockwise or counterclockwise so as to be in a length adjustment release state and a lock state. Alternatively, a screw groove may be formed in the adjustment portion 6300, a screw having a screw thread corresponding to the screw groove may be fixed to the support 610, and the length of the screw inserted into the adjustment portion 630 may be adjusted, whereby the overall length of the support 610 may be adjusted.

However, the configuration of the adjustment portion is not particularly restricted as long as the length of the support can be adjusted.

Meanwhile, the guide member 310 may be contaminated by the electrode slurry 20, and if the guide member is repeatedly used, foreign matter may be transferred to other electrode slurries 20, potentially causing electrode defects. Therefore, a cleaning unit 500 configured to clean the guide member 310 may be further included. For example, in the electrode sheet manufacturing apparatus according to the first embodiment, as shown in FIG. 1, the cleaning unit 500 may be provided between the rear end of the electrode current collector sheet winding roll 120 and the front end of the guide member winding roll 330 to clean the guide member 310 before the guide member is wound on the guide member winding roll 330.

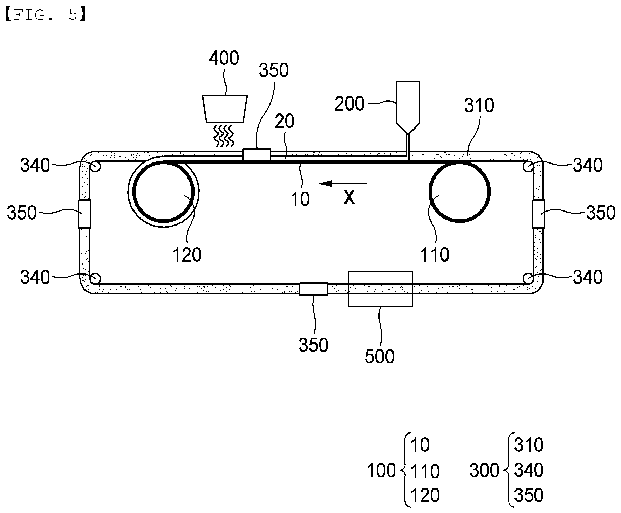

FIG. 5 is a schematic view of an electrode sheet manufacturing apparatus according to a second embodiment of the present invention.

Referring to FIG. 5, in the electrode sheet manufacturing apparatus according to the second embodiment of the present invention, a guide member 310 is configured such that a plurality of guide lines is connected to each other via connection links 350 in a closed-loop form, and the guide member 310 is rotated by a transfer roller 340 in a state of being added to each of both ends of an electrode current collector sheet 10.

Since the guide member 310 is configured in a closed-loop form, continuous transfer along a fixed transfer path is possible. Therefore, unlike in the first embodiment, a process of separating a guide member winding roll having the entirety of the guide member wound thereon and moving the guide member winding roll to the position of a guide member supply roll is unnecessary.

However, since the length from an electrode current collector sheet supply roll 110 to an electrode current collector sheet winding roll 120 may be changed during an electrode sheet manufacturing process and it is difficult to manage the guide member if the guide member is too long, the plurality of guide lines may be connected to each other via the connection links 350, whereby the length of the guide member 310 may be adjusted.

Since the closed loop of the guide member is rotated in a taut state, the guide member may be stably attached to the electrode current collector sheet even without the addition of a separate adhesive material.

In the electrode sheet manufacturing apparatus according to the second embodiment, a cleaning unit 500 may be disposed on a transfer path of the guide member 310. In the second embodiment, since the guide member 310 is continuously moved, the cleaning unit 500 may be disposed anywhere except between the electrode assembly sheet supply roll 110 and the electrode assembly sheet winding roll 120.

Regarding the position where a coating unit coats electrode slurry, a drying unit, and a plurality of supports 610 configured to prevent separation of the guide member, a description of the electrode sheet manufacturing apparatus according to the first embodiment may be applied identically to the electrode sheet manufacturing apparatus according to the second embodiment.

Those skilled in the art to which the present invention pertains will appreciate that various applications and modifications are possible within the scope of the present invention based on the above description.

### (Description of Reference Numerals)

- 10:: Electrode current collector sheet
- 20:: Electrode slurry
- 100:: Electrode current collector unit
- 110:: Electrode current collector sheet supply roll
- 120:: Electrode current collector sheet winding roll
- 200:: Coating unit
- 300:: Guide unit
- 310:: Guide member
- 311:: First surface
- 312:: Second surface
- 320:: Guide member supply roll
- 330:: Guide member winding roll
- 340:: Guide roll
- 350:: Connection link
- 400:: Drying unit
- 500:: Cleaning unit
- 610:: Support
- 620:: Roller
- 621:: Rotary shaft
- 630:: Adjustment portion

## Claims

1. An electrode sheet manufacturing apparatus comprising:
an electrode current collector unit comprising an electrode current collector sheet supply roll configured to supply an electrode current collector sheet and an electrode current collector sheet winding roll configured to rewind the electrode current collector sheet;
a coating unit configured to coat the electrode current collector sheet with electrode slurry; and
a guide unit comprising a band-shaped guide member configured to prevent run-off of the electrode slurry, wherein
the guide member is in contact with the electrode current collector sheet but is not attached thereto.

2. The electrode sheet manufacturing apparatus according to claim 1, wherein
the guide member of the guide unit is added to each of both ends of the electrode current collector sheet parallel to a transfer direction thereof, and
the coating section coats the electrode current collector sheet having the guide member added thereto with the electrode slurry.

3. The electrode sheet manufacturing apparatus according to claim 2, wherein the coating unit coats a remainder of a surface of the electrode current collector sheet on which the guide member is not located with the electrode slurry.

4. The electrode sheet manufacturing apparatus according to claim 1, further comprising a drying unit disposed at a front end of the electrode current collector sheet winding roll, the drying unit being configured to dry the electrode slurry.

5. The electrode sheet manufacturing apparatus according to claim 1, wherein a thickness of the guide member is greater than a coating thickness of the electrode slurry.

6. The electrode sheet manufacturing apparatus according to claim 1, wherein a transfer speed of the guide member is equal to a transfer speed of the electrode current collector sheet.

7. The electrode sheet manufacturing apparatus according to claim 1, further comprising:
a plurality of supports configured to prevent separation of the guide member, wherein
the plurality of supports is located to support a second surface of the guide member, which is an outer surface opposite a first surface facing the electrode slurry.

8. The electrode sheet manufacturing apparatus according to claim 7, wherein a roller is mounted on a part of each of the supports in contact with the guide member.

9. The electrode sheet manufacturing apparatus according to claim 7, further comprising an adjustment portion configured to adjust a length of each of the supports.

10. The electrode sheet manufacturing apparatus according to claim 1, wherein the guide unit further comprises a plurality of guide rolls configured to guide a transfer direction of the guide member.

11. The electrode sheet manufacturing apparatus according to claim 1, further comprising a cleaning unit configured to clean the guide member.

12. The electrode sheet manufacturing apparatus according to claim 1, wherein
the guide member is configured to have a wound structure in which the guide member is wound on a roll rotated by a rotary shaft, and
the guide unit comprises:
a guide member supply roll configured to supply the guide member to each of both ends of the electrode current collector sheet; and
a guide member winding roll configured to rewind the guide member after coating and drying of the electrode slurry are completed.

13. The electrode sheet manufacturing apparatus according to claim 1, wherein
the guide member is configured such that a plurality of guide lines is connected to each other via connection links in a closed-loop form, and
the guide member is rotated by a transfer roller in a state of being added to each of both ends of the electrode current collector sheet.

14. The electrode sheet manufacturing apparatus according to claim 13, wherein a length of the guide member is adjusted through the connection links.
